# EUROPÄISCHE PATENTSCHRIFT

(11) **EP 3 864 487 B1**
(45) Veröffentlichungstag und Bekanntmachung des Hinweises auf die Patenterteilung: **25.10.2023**
(21) Anmeldenummer: 19770038.8
(22) Anmeldetag: 16.09.2019
(51) Int. Cl.: B33Y 50/00, G06F 30/30, G06F 113/10, H05K 3/00, H05K 3/12, H05K 1/18

(54) **VERFAHREN ZUR VORBEREITUNG DER AUTOMATISIERTEN HERSTELLUNG EINER ELEKTRONIKKOMPONENTE, VERFAHREN ZUR AUTOMATISIERTEN HERSTELLUNG UND/ODER ZUM AUTOMATISIERTEN NACHBEARBEITEN EINER ELEKTRONIKKOMPONENTE UND HERSTELLUNGSSYSTEM**
METHOD FOR PREPARING THE AUTOMATED PRODUCTION OF AN ELECTRONIC COMPONENT, METHOD FOR AUTOMATED PRODUCTION AND/OR FOR AUTOMATED POST-PROCESSING OF AN ELECTRONIC COMPONENT AND SYSTEM
PROCÉDÉ DE PRÉPARATION DE LA FABRICATION AUTOMATISÉE D'UN COMPOSANT ÉLECTRONIQUE, PROCÉDÉ DE FABRICATION AUTOMATISÉE ET/OU D'USINAGE ULTÉRIEUR AUTOMATISÉ D'UN COMPOSANT ÉLECTRONIQUE ET SYSTÈME

(30) Priorität: 11.10.2018 DE 102018125216
(43) Veröffentlichungstag der Anmeldung: 18.08.2021
(73) Patentinhaber: Neotech Amt GmbH, 90429 Nürnberg (DE)
(72) Erfinder: HEDGES, Martin, 90443 Nürnberg (DE); HÖRBER, Johannes, 91560 Heilsbronn (DE)
(74) Vertreter: Lindner Blaumeier Patent- und Rechtsanwälte
(86) Internationale Anmeldenummer: PCT/EP2019/074722
(87) Internationale Veröffentlichungsnummer: WO 2020/074215

(56) Entgegenhaltungen:
- US-A1- 2007 092 128
- Martin Hedges: "3D Printed Electronics Process - Enabling Novel Applications and Mass Production", , 17. Dezember 2015 (2015-12-17), XP055650340, Gefunden im Internet: URL:http://www.3dprintingelectronicsconfer ence.com/wp-content/uploads/2016/01/Martin -Hedges.pdf [gefunden am 2019-12-06]
- SWEE M MOK ET AL: "Modeling Automatic Assembly and Disassembly Operations for Virtual Manufacturing", IEEE TRANSACTIONS ON SYSTEMS, MAN AND CYBERNETICS. PART A:SYSTEMS AND HUMANS, IEEE SERVICE CENTER, PISCATAWAY, NJ, US, Bd. 31, Nr. 3, 1. Mai 2001 (2001-05-01), XP011056391, ISSN: 1083-4427

## Beschreibung

Die Erfindung betrifft ein Verfahren automatisierten Herstellung einer Elektronikkomponente, bei der auf wenigstens einem Substrat wenigstens ein SMD-Bauteil und/oder wenigstens eine Leiterbahn und/oder wenigstens eine Steckerkomponente und/oder wenigstens ein gedrucktes elektronisches Bauteil angeordnet werden, wobei zur Vorbereitung der Herstellung der Elektronikkomponente durch 3D-Drucken, wobei eine den Aufbau der Elektronikkomponente beschreibende, insbesondere mit einer CAD- und/oder CAM-Einrichtung erstellte Aufbauinformation zur Ermittlung einer einen ersten, maschinenlesbaren Steuerbefehlssatz für eine wenigstens teilweise zum 3D-Drucken ausgebildete Herstellungseinrichtung umfassenden Herstellungsinformation verwendet wird. Es wird auch ein Herstellungssystem besprochen.

Elektronikkomponenten als Funktionseinheiten, die letztlich wenigstens eine wenigstens eine Funktion bereitstellende elektronische Schaltung bereitstellen, sind im Stand der Technik grundsätzlich bereits seit langem bekannt. Hierbei wird zur herkömmlichen Herstellung einer Elektronikkomponente als Substrat für Leiterbahnen und Elektronikbauteile üblicherweise eine bedruckte oder in herkömmlichen Metallisierungsverfahren hergestellte Leiterplatte (PCB) verwendet, auf die die Leiterbahnen aufgebracht sind oder werden, welche insbesondere durch Verlöten mit den Elektronikbauteilen verbunden werden. Neuere Herstellungsvarianten für Elektronikkomponenten betreffen die Verwendung von Herstellungseinrichtungen, die zur additiven Fertigung, beispielsweise durch Drucktechnologien, ausgebildet sind. Hierbei können auch andere Substrate eingesetzt werden, beispielsweise Kunststoffsubstrate, Glasfasersubstrate, Kohlenstofffasersubstrate, Holzpanel-Substrate, ggf. beschichtet, und dergleichen. Leiterbahnen, beispielsweise aus Silber oder Kupfer, werden mittels des 3D-Druckens auf das insbesondere beliebig geformte und/oder selbst 3D-gedruckte Substrat aufgebracht, wonach, beispielsweise durch ein Pick-and-Place-Verfahren, insbesondere unter Verwendung von Leit-Klebstoff, die als SMD-Bauteile (SMD - Surface-Mounted Device) ausgebildeten Elektronikbauteile zugefügt werden können. Elektronische Bauteile können auch gedruckt werden, beispielsweise als gedruckter Widerstand, gedruckter Kondensator und/oder gedruckte Diode. Dabei ist insbesondere auch eine Einbettung von Leiterbahnen und/oder sonstigen Bauteilen möglich. Die Verwendung von 3D-Drucken zur Herstellung von Elektronikkomponenten bietet nicht nur fertigungstechnisch eine Vielzahl von Vorteilen, sondern erhöht insbesondere auch die Flexibilität und Vielfalt herstellbarer Elektronikkomponenten, nachdem beispielsweise elektronische Schaltungen auch unmittelbar auf anderweitig verwendete Komponenten aufgebracht werden können, beispielsweise bei Kraftfahrzeugen auf spitzgegossene Strukturbauteile oder Composite-Panels.

Nachdem beim 3D-Drucken von Elektronikkomponenten meist eine Herstellungseinrichtung eingesetzt wird, die eine Bewegungsmechanik umfasst, mittels welcher verschiedene Herstellungswerkzeuge, beispielsweise zum 3D-Drucken Piezo-Werkzeuge, Werkzeuge zum aerosolbasierten 3D-Drucken, Ink-Jetting-Werkzeuge, Dispensing-Werkzeuge und/oder FDM-Werkzeuge und/oder zur sonstigen Bearbeitung der Materialien Oberflächenbearbeitungs-Werkzeuge, Plasma Cleaning-Werkzeuge, Sinter-Werkzeuge (Licht/Laser), UV-Aushärtungs (Curing)-Werkzeuge und/oder dergleichen, bewegt werden können, lässt sich eine äußerst weitgehende, insbesondere vollständige Automatisierung des Herstellungsprozesses erreichen. Hierbei können CAD (Computer-Aided Design) und/oder CAM (Computer-Aided Manufacturing) eingesetzt werden, um als Herstellungsinformation Steuerbefehlssätze für die Herstellungseinrichtung zu erzeugen, die innerhalb einer Steuereinrichtung der Herstellungseinrichtung unmittelbar umgesetzt werden können. Während es hierbei grundsätzlich denkbar ist, eine manuelle Programmierung vorzunehmen, um beispielsweise in einer maschinenlesbaren Programmiersprache den ersten Steuerbefehlssatz der Herstellungsinformation zu erhalten, ist es gängig, die Programmierung des Steuerbefehlssatzes maschinell vorzunehmen, und zwar auf Grundlage einer Aufbauinformation, die beispielsweise ein 3D-Modell der Elektronikkomponente mittels entsprechender Algorithmen in den maschinenverständlichen und unmittelbar in der Steuereinrichtung der Herstellungseinrichtung verwendbaren Steuerbefehlssatz umwandelt. Eine derartige maschinelle Programmierung geht mithin von CAD aus und erzeugt einen CAM -geeigneten Steuerbefehlssatz. Hierzu können Recheneinrichtungen verwendet werden, die auch als CAD- und/oder CAM-Einrichtungen bezeichnet werden können. Eine beispielhaft verwendbare Programmiersprache ist der G-Code nach der Norm DIN 66025/ISO6983.

Mit dem zunehmenden Einsatz von Elektronikkomponenten in verschiedensten Einrichtungen des Alltags und der Industrie nimmt auch der Elektronikabfall (E-Waste) in seiner Menge zu. Das Elektronikrecycling (E-Waste-Recycling), das bedeutet, die Wiederverwendung und Wiederverarbeitung von elektrischem und elektronischem Material jeglicher Art nach dem Ende der Lebenszeit der Elektronikkomponente, gewinnt zunehmend an Bedeutung. Allerdings sind aktuelle Recyclingverfahren komplex, arbeitsintensiv und erzeugen eine große Menge nicht mehr wiederverwendbaren Abfalls. Dabei umfassen bekannte Recyclingverfahren des Standes der Technik üblicherweise eine Zerlegung des Produkts, wobei diese Zerlegung manuell erfolgen kann, jedoch auch beispielsweise eine Art "Zermahlen" oder dergleichen hiervon umfasst sein kann. Beispielsweise ist es bekannt, zunächst ein Produkt zu zerlegen und manuell die Subsysteme zu sortieren, aus denen es besteht. In einem arbeitsintensiven zweiten Schritt werden auch die Subsysteme, insbesondere wenigstens teilweise manuell, zerlegt. Die E-Waste-Gegenstände werden zerlegt, um alle Teile zurückzuerhalten, und dann in Hauptmaterialien und Komponenten kategorisiert. Die zerlegten Gegenstände werden dann aufgeteilt nach Einzelteilen, die weiterverwendet werden können, und solche, die weiter im Recycling bearbeitet werden. Die Gegenstände, die nicht effizient zerlegt werden können und/oder eine Mischung aus Materialien enthalten, beispielsweise ein verbliebenes PCB, welches aus Harzen, Glasfasern, Kupfer, Nickel, Gold, Zinn, Aluminium, Lötmitteln und anderen Materialien bestehen kann, wird dann, gegebenenfalls gemeinsam mit anderen Ergebnissen der Zerlegung, geschreddert, wobei auf die entstehenden Kleinstteile Materialtrennungsverfahren angewendet werden können, um die Materialien zu trennen und insbesondere einzeln zurückzugewinnen. Beispielsweise kann zunächst ein oberhalb eines Transportbandes angeordneter Magnet eingesetzt werden, um magnetische Materialien, umfassend Stahl und Eisen, aus den Kleinstteilen zu entfernen. Ein weiterer Schritt kann die Trennung von metallischen und nichtmetallischen Komponenten sein, wobei die Metalle dann entweder verkauft werden können oder aber zur Herstellung neuer Elektronikkomponenten eingesetzt werden können. In einem beispielhaften letzten Schritt kann Plastikmaterial von Glasmaterialien unter Verwendung von Wasser getrennt werden. Insgesamt besteht also ein äußerst aufwändiger und langwieriger Prozess, um Materialien von Elektronikkomponenten beziehungsweise diesen beinhaltenden Produkten wiederverwerten zu können.

Ein weiteres Problem bei Einsatz moderner Fertigungstechnologien, insbesondere beim 3D-Drucken, besteht in der dort verbesserten Integration der Materialien und Bauteile. So sind beispielsweise Ausgestaltungen bekannt, bei denen Leiterbahnen und/oder Bauteile, beispielsweise gedruckte elektronische Bauteile, eingebettet und von außen nicht sichtbar/erkennbar sind. Hierdurch wird zukünftig ein Recycling und/oder eine Reparatur nochmals deutlich erschwert.

In einer Präsentation von Martin Hedges, "3D Printed Electronics Process - Enabling Novel Applications and Mass Production", 17. Dezember 2015, XP055650340, http://www.3dprintingelectronicsconference.com/wpcontent/uploads/2016/01/Martin-Hedges.pdf, werden verschiedene 3D-Druckprozesse erläutert.

In einem Artikel von Swee M. Mok et al., "Modeling Automatic Assembly and Disassembly Operations for Virtual Manufacturing", IEEE Transactions on Systems, Man and Cybernetics, Part A: Systems and Humans, IEEE Service Center, Piscataway, NJ, US, Bd. 31, Nr. 3, 1. Mai 2001, XP011056391, ISSN: 1083-4427, wird ein Verfahren zur Auswertung von Produkten in einer Designphase beschreiben, wobei virtuelle Herstellungs- und Zerlegungsprozesse als Grundlage einer Kostenabschätzung herangezogen werden.

US 2007/0092128 A1 offenbart eine automatische Reparatur elektrischer Schaltungen. Eine Inspektionsfunktion inspiziert Leiterplatten und stellt eine maschinenlesbare Ausgabe bereit, die anzeigt, wo Reparaturen benötigt werden. Eine automatische Reparaturfunktion nutzt diese Ausgabe.

Der Erfindung liegt daher die Aufgabe zugrunde, eine Möglichkeit zur verbesserten Nachbearbeitung von Elektronikkomponenten, insbesondere zu deren Recycling, anzugeben.

Zur Lösung dieser Aufgabe ist bei einem Verfahren der eingangs genannten Art erfindungsgemäß vorgesehen, dass gemeinsam mit dem ersten Steuerbefehlssatz eine Nachbearbeitungsinformation aus der Aufbauinformation, und insbesondere zusätzlich der Herstellungsinformation, ermittelt wird, die eine einen zweiten, maschinenlesbaren Steuerbefehlssatz für eine zum wenigstens teilweise, insbesondere vollständig, automatisierten Recycling der Elektronikkomponente ausgebildete Recyclingeinrichtung für das Recycling der Elektronikkomponente durch Rückgewinnung wenigstens eines Materials der Elektronikkomponente umfassende Recyclinginformation und/oder eine einen dritten, maschinenlesbaren Steuerbefehlssatz für eine zum wenigstens teilweise automatischen Reparieren der Elektronikkomponente ausgebildete Reparatureinrichtung umfassende Reparaturinformation umfasst, wobei die Elektronikkomponente wenigstens teilweise, bevorzugt vollständig, automatisiert mittels der den ersten Steuerbefehlssatz ausführenden Herstellungseinrichtung durch das 3D-Drucken hergestellt wird, wobei die Nachbearbeitungsinformation nach Herstellung der Elektronikkomponente in einem Speichermittel der Elektronikkomponente gespeichert wird.

Gemäß der vorliegenden Erfindung wurde erkannt, dass für wenigstens teilweise 3D-gedruckte Elektronikkomponenten ("Printed Electronics" (PE)) die Möglichkeit zur Vereinfachung und zur Reduzierung der Komplexität des Elektronik-Recycling besteht, indem das Recycling (oder allgemein eine Nachbearbeitung) mit der ursprünglichen Herstellung verknüpft wird, um ein hohes Niveau an Automatisierung zu erreichen, welches kosteneffizient, umweltfreundlich und aufwandsreduzierend ist und zudem dazu führt, dass die Materialien besonders zielgenau und verlustarm zurückgewonnen werden können. Hierzu kommt, dass beim 3D-Drucken die Anzahl der verwendeten Materialien in der Elektronikkomponente ohnehin reduziert ist, zumindest im Vergleich zu traditionellen PCB-basierten Elektronikkomponenten, was eine weitere Vereinfachung zur Folge haben kann. Die Idee ist es nun, dass die Aufbauinformation und/oder insbesondere auch die Herstellungsinformation bereits wichtige Details darüber enthält, wo auf bzw. in der Elektronikkomponente welche Materialien vorliegen und wie diese aufgebracht sind, welche unter Kenntnis der Eigenschaften der zu verwendenden Recyclingeinrichtung durch physikalische und technische, automatisierte Analyse mithin nicht nur verwendet werden können, um einen ersten Steuerbefehlssatz für eine Herstellungseinrichtung zu erstellen, sondern auch wenigstens einen weiteren Steuerbefehlssatz für die Nachbearbeitung, insbesondere das Recycling, zu erstellen, um dieses zu automatisieren, zu optimieren und auf die speziellen Eigenschaften der Elektronikkomponente abzustellen.

Dabei ist ein maschinenlesbarer Steuerbefehlssatz, wie eingangs dargelegt, so zu verstehen, dass dieser unmittelbar von einer Steuereinrichtung der Herstellungseinrichtung bzw. Recyclingeinrichtung/Reparatureinrichtung in eine entsprechende Ansteuerung der Komponenten der jeweiligen Einrichtung umgesetzt werden kann. Hierzu wird der Steuerbefehlssatz bevorzugt in einer Programmiersprache ("Maschinencode"), beispielsweise in G-Code, ermittelt.

Die Herstellung von Elektronikkomponenten durch 3D-Drucken kann dabei auf beliebigen zweidimensional oder bevorzugt dreidimensional geformten Oberflächen des Substrats der Elektronikkomponente erfolgen, wobei das Substrat eine mechanische Struktur darstellt, beispielsweise eine Platte, eine Folie oder ein dreidimensionales gegossenes Bauteil, wobei auch zusammengesetzte mechanische Strukturen denkbar sind. Insbesondere kann auch das Substrat (also der Träger) selbst wenigstens teilweise durch 3D-Druck erstellt werden. Alternativ können die mechanische Struktur bzw. das Substrat insgesamt auch durch herkömmliche Herstellungsmethoden erzeugt sein. Schaltkreise können durch eine Vielzahl von Verfahren aufgebracht werden, beispielsweise Ink-Jetting, Aerosol-Jetting, Dispensen und dergleichen. SMD-Bauteile, beispielsweise Chips, Sensoren, LEDs, Widerstände, Kondensatoren, Verbinder, Batteriehalter und dergleichen können entweder bereits vor dem Leiterbahndruck, mit dem Leiterbahndruck oder aber nach dem Leiterbahndruck aufgebracht werden, insbesondere unter Nutzung leitfähiger Klebstoffe, wobei jedoch auch Löten, Drahtbonden und/oder andere geeignete Verfahren denkbar sind. Das wenigstens eine Druckmaterial und/oder wenigstens eine Befestigungsmaterial für die SMDs wird ausgehärtet oder gesintert unter Nutzung geeigneter Methoden, beispielsweise durch Hitze, Licht und/oder Laser.

Die Herstellung von "Printed Electronics", also derartiger Elektronikkomponenten, unter Verwendung von 3D-Drucken wird, wie beschrieben, digital getrieben. Das Drucken der Leiterbahnen sowie das Aufbringen der SMD-Bauteile sowie Vor- und Nachbearbeitungsschritte werden durch erste Steuerbefehlssätze, also Maschinencode, ausgeführt. Dabei kann in einer bevorzugten Ausführungsform ein insbesondere dreidimensionales CAD-Modell der Elektronikkomponente als Aufbauinformation und somit Startpunkt verwendet werden. Die Herstellungsschritte (3D-Drucken, SMD-Aufbringung, Vor- und/oder Nachbearbeitungsschritte) werden dann unter Nutzung geeigneter CAD/CAM-Software einer Recheneinrichtung, insbesondere einer CAD- und/oder CAM-Einrichtung, programmiert, insbesondere durch Erstellung von Bearbeitungswegen für Werkzeuge. Der Maschinencode der ersten Steuerbefehlssätze informiert die Herstellungseinrichtung darüber, wie die entsprechenden Herstellungsschritte durchzuführen sind, um die Elektronikkomponente herzustellen. Der erste Steuerbefehlssatz wird innerhalb der Herstellungseinrichtung ausgeführt und die entsprechenden Herstellungsschritte erfolgen automatisiert.

Vor diesem Hintergrund schlägt die Erfindung nun vor, bei der Ermittlung der Herstellungsinformation gleichzeitig auch eine Verknüpfung zum Recycling herzustellen, indem auch eine Nachbearbeitungsinformation, insbesondere umfassend bzw. als eine Recyclinginformation, ermittelt wird. Wird beispielsweise ein CAM-Postprozessor oder eine andere Recheneinheit verwendet, um die Herstellungsinformation mit dem ersten Steuerbefehlssatz zu erzeugen, wird gleichzeitig ein zweiter Steuerbefehlssatz, also ein zweiter Maschinencode, und/oder ein dritter Steuerbefehlssatz erzeugt, der Zelegungs- und/oder Reparaturmaßnahmen der herzustellenden Elektronikkomponente betrifft. Die entsprechende Nachbearbeitungsinformation wird vorgehalten, also gespeichert, bis sie benötigt wird. Wird die Elektronikkomponente dann beispielsweise außer Dienst genommen oder obsolet, kann die Recyclinginformation der Nachbearbeitungsinformation unmittelbar genutzt werden, mithin durch die Recyclingeinrichtung unmittelbar ausgewertet werden, um wenigstens teilweise automatisch die Elektronikkomponente in recycelbares Material und/oder unmittelbar wiederverwertbare Bauteile zu zerlegen.

Dabei wurde festgestellt, dass das Wissen über den Aufbau und die Herstellung der Elektronikkomponente, welches während der Vorbereitung der Herstellung der Elektronikkomponente erzeugt wird, nicht nur im Hinblick auf eine Verknüpfung mit dem Recycling nutzbar einsetzbar ist, sondern auch im Hinblick auf gegebenenfalls vorzunehmende Reparaturmaßnahmen. Sollen beispielsweise SMD-Bauteile ersetzt werden, können entsprechende, ebenso unmittelbar maschinennutzbare dritte Steuerbefehlssätze erzeugt werden, welche beispielsweise gezielt die Position des SMD-Bauteils anfahren und dieses mittels geeigneten Werkzeugen ersetzen können, ohne dass für die Reparatur eine Lokalisierung, Identifikation und dergleichen notwendig wäre. Gegebenenfalls unterbrochene Leiterbahnen können aufgrund auch im dritten Steuerbefehlssatz vorhandener Bearbeitungswege "überdruckt" und somit neu verbunden werden. Dabei wird beispielsweise, zunächst, wie grundsätzlich bekannt, der Fehler festgestellt, beispielsweise detektiert und identifiziert. Zu jeweiligen Fehlerfällen kann der dritte Steuerbefehlssatz unterschiedliche Unterbefehlssätze enthalten, die den entsprechenden Fehler reparieren können, ohne dass dann noch eine Lokalisierung, Identifikation etc. notwendig wäre. Mithin ist auch eine Verknüpfung zu Reparaturmaßnahmen vorteilhaft möglich.

Dabei sei an dieser Stelle auch angemerkt, dass insbesondere die Recyclinginformation auch weitere Teilinformationen neben dem zweiten Steuerbefehlssatz enthalten kann, beispielsweise eine abrufbare Liste verwendeter Materialien und/oder SMD-Bauteile und dergleichen. Hiermit kann beispielsweise eine Materialgewinnung und/oder Wiedergewinnung von Bauteilen vorgeplant werden. Es sei ferner noch angemerkt, dass die Recyclinginformation selbstverständlich auch genutzt werden kann, um Produkte mit Herstellungsdefekten wieder zu zerlegen ("reverse manufacture").

Mit der vorliegenden Erfindung können somit eine Vielzahl von Vorteilen erreicht werden. Zum einen ist ein hohes Niveau an Automatisierung und somit eine Reduzierung manueller Schritte beim Recycling von Elektronikkomponenten möglich. Wissen über den Aufbau und/oder die Herstellung wird physikalischtechnisch analysiert und zur Erzeugung von unmittelbar in einer Recyclingeinrichtung (bzw. Reparatureinrichtung) nutzbaren Steuerbefehlssätzen eingesetzt, welche für den entsprechenden Fall vorgehalten werden. Auf diese Weise ist insbesondere auch ein genaueres und effizienteres Recycling möglich, so dass ein größerer Anteil der verwendeten Materialien zurückgewonnen bzw. wiederverwertet werden kann.

Die vorliegende Erfindung kann zum einen vorsehen, dass die Nachbearbeitungsinformation nach Herstellung der Elektronikkomponente in einem Speichermittel der Elektronikkomponente vorgehalten wird. Das bedeutet, die Nachbearbeitungsinformation wird unmittelbar mit der Elektronikkomponente in dieser vorgehalten, wobei in besonders bevorzugter Ausgestaltung der vorliegenden Erfindung vorgesehen sein kann, dass die Recyclingeinrichtung die Recyclinginformation und/oder die Reparatureinrichtung die Reparaturinformation automatisch aus dem Speichermittel ausliest. Bei dem Speichermittel kann es sich dann um eine von verschiedenen Arten von insbesondere unmittelbar elektronisch durch eine entsprechende Maschine auslesbaren Speichereinrichtungen handeln, beispielsweise basierend auf der RFID-Technologie. Auf diese Weise ist ein besonders einfaches Recycling/eine besonders einfache Reparatur möglich, ohne dass ein unmittelbarer Kontakt zum Hersteller der Elektronikkomponente bestehen muss. Liegt die Elektronikkomponente zum Recycling vor, wird die Nachbearbeitungsinformation, insbesondere der zweite Steuerbefehlssatz, durch die Recyclingeinrichtung eingelesen und kann unmittelbar angewendet werden, um die Elektronikkomponente zu recyceln, was den Aufwand weiter deutlich reduziert und einem sachgerechten Recycling von Elektronikkomponenten und somit dem Umweltschutz auch dann zuträglich ist, wenn der Hersteller beispielsweise nicht mehr verfügbar ist.

Zum anderen kann die Erfindung zusätzlich vorsehen, dass die Nachbearbeitungsinformation abrufbar auf einer Servereinrichtung des Herstellers der Elektronikkomponente vorgehalten wird. Beispielsweise können für alle Arten von Elektronikkomponenten, die ein Hersteller anbietet, die entsprechenden Nachbearbeitungsinformationen abrufbar auf einer Servereinrichtung, insbesondere des Internets, bereitgestellt werden, beispielsweise auf einer entsprechenden Website und/oder einer insbesondere auch unmittelbar durch die Recyclingeinrichtung und/oder die Reparatureinrichtung direkt ansprechbaren Datenbank.

Allgemein ausgedrückt kann die Recyclinginformation, insbesondere der zweite Steuerbefehlssatz, eine durchzuführende und/oder auszusparende Recyclingmaßnahme und/oder eine anzuwendende Reihenfolge von Recyclingmaßnahmen und/oder wenigstens einen Betriebsparameter wenigstens einer Recyclingmaßnahme und/oder ein zu verwendendes Recyclingmaterial, insbesondere Trennmittel, und/oder ein zu verwendendes Recyclingwerkzeug beschreiben. Das Bekanntsein des Aufbaus bzw. der Herstellung der Elektronikkomponente kann also unmittelbar in konkrete, passgenaue Maschinenanweisungen für die Recyclingeinrichtung umgesetzt werden, um eine möglichst weitreichende Wiederverwertung/Rückgewinnung zu erlauben, indem passende Recyclingmaßnahmen gewählt werden und diese in passender Reihenfolge geeignet parametriert werden.

Dabei ist es im Rahmen der vorliegenden Erfindung von besonderem Vorteil, wenn zur Ermittlung der Recyclinginformation eine Baugleichheit der Herstellungseinrichtung und der Recyclingeinrichtung angenommen wird. Wie bereits erwähnt wurde, kann eine Herstellungseinrichtung zur Herstellung von Elektronikkomponenten unter Verwendung von 3D-Drucken insbesondere zum einen eine Bewegungsmechanik, zum anderen wenigstens ein Herstellungswerkzeug umfassen, insbesondere wenigstens ein Druckwerkzeug und/oder wenigstens ein Platzierwerkzeug für SMD-Bauteile und/oder wenigstens ein Vor- und/oder Nachbearbeitungswerkzeug, beispielsweise Aushärtungs- und/oder Sinterwerkzeug. Im Rahmen der vorliegenden Erfindung wurde nun erkannt, dass es von besonderem Vorteil sein kann, eine baugleiche Maschine als Recyclingeinrichtung zu verwenden, indem wenigstens ein Teil der Herstellungswerkzeuge durch entsprechende Recyclingwerkzeuge ersetzt wird. Insbesondere kann auch eine komplett gleiche Einrichtung als Herstellungseinrichtung und Recyclingeinrichtung verwendet werden. Dies hat insbesondere den Vorteil, dass Bearbeitungswege und dergleichen im selben Steuerbefehls-Framework und/oder Koordinatensystem kreiert werden können. Mit besonderem Vorteil können in einer solchen Ausgestaltung ursprünglich zur Herstellung genutzte Herstellungseinrichtungen weiterverwertet werden, auch bei Vorliegen von Weiterentwicklungen, um die durch sie hergestellten Elektronikkomponenten am Ende ihrer Lebenszeit zu recyceln und/oder Reparaturmaßnahmen durchzuführen. Werden beispielsweise zwar neue Herstellungseinrichtungen geschaffen, die eine größere Genauigkeit aufweisen, können die alten Herstellungseinrichtungen dennoch weiter genutzt werden, um zum Recycling von (insbesondere älteren) Elektronikkomponenten eingesetzt zu werden.

In konkreter, vorteilhafter Weiterbildung der Erfindung kann vorgesehen sein, dass sowohl die Herstellungseinrichtung als auch die Recyclingeinrichtung zur Bewegung wenigstens eines Werkzeugs entlang von durch die Steuerbefehlssätze der Herstellungsinformation und der Recyclinginformation beschriebenen Bearbeitungswegen relativ zu der Elektronikkomponente ausgebildet sind, wobei wenigstens ein Bearbeitungsweg, insbesondere alle Bearbeitungswege, der Herstellungsinformation und der Recyclinginformation gleich gewählt werden. Dies ist insbesondere dann vorteilhaft, wenn die Herstellungseinrichtung und die Recyclingeinrichtung ohnehin eine gleiche Bewegungsmechanik aufweisen. Wird dann beispielsweise entlang eines bestimmten Bearbeitungswegs eine Leiterbahn aufgebracht, kann derselbe Bearbeitungsweg zu einem späteren Zeitpunkt mit einem entsprechend vorgesehenen Recyclingwerkzeug erneut abgefahren werden, um die Leiterbahn effektiv wieder zu entfernen. So ist es beispielsweise denkbar, einen Fräskopf und/oder ein ein Trennmittel absonderndes Recyclingwerkzeug zur Entfernung einer Leiterbahn und/oder eines sonstigen aufgebrachten Materials einzusetzen. Beispielsweise können mittels einer Säure Leiterbahnen abgelöst werden und durch einen Absaugprozess entfernt werden. In diesem Fall wird also ein Druckkopf als Herstellungswerkzeug durch einen Fräskopf und/oder ein Trennmittelabsonderungswerkzeug als Recyclingwerkzeug ersetzt, falls nicht ohnehin der Druckkopf auch zur Abgabe des Trennmittels eingesetzt werden kann. Auch über Leiterbahnen hinaus können jedoch Bearbeitungswege als Fahrbahnen von Werkzeugen Bedeutung sowohl für die Herstellungsinformation als auch für die Recyclinginformation bzw. die entsprechenden Steuerbefehlssätze haben. Beispielsweise können Bearbeitungswege, entlang denen per Pick-and-Place SMD-Bauteile platziert werden, erneut genutzt werden, um die entsprechenden Positionen der SMD-Bauteile anzufahren und beispielsweise ein Lösungsmittel für einen verwendeten Klebstoff als Trennmittel abzugeben, so dass das SMD-Bauteil abgenommen und gegebenenfalls sogar wiederverwertet werden kann.

Es kann mithin vorgesehen sein, dass bei gleichen Bearbeitungswegen seitens der Herstellungseinrichtung und der Recyclingeinrichtung wenigstens teilweise unterschiedliche Werkzeuge verwendet werden und/oder wenigstens einer des wenigstens einen gleichen Bearbeitungswegs den Verlauf einer 3D-zu druckenden Leiterbahn betrifft.

Eine vorteilhafte Weiterbildung der vorliegenden Erfindung kann zudem vorsehen, dass, insbesondere bei einer angenommenen geringeren Genauigkeit der Recyclingeinrichtung, die Bearbeitungsbreite entlang wenigstens eines des wenigstens einen gleichen Bearbeitungswegs für die Recyclingeinrichtung größer als für die Herstellungseinrichtung gewählt wird. Auf diese Weise können beispielsweise ältere Herstellungseinrichtungen, die eine geringere Bearbeitungsgenauigkeit aufweisen, als Recyclingeinrichtungen weiterverwertet werden, nachdem es bei dem Recycling nicht auf höchste Genauigkeit ankommt, sondern hauptsächlich durch die Recyclingmaßnahme das Recyclingergebnis, im Allgemeinen eine Material- und/oder Bauteiltrennung, erzielt werden soll. Entsprechend vorliegende Toleranzen können durch eine breite Wahl des Bearbeitungsweges abgedeckt werden. Soll beispielsweise eine Leiterbahn mittels eines Trennmittels, beispielsweise einer Säure, abgelöst oder abgefräst werden, kann hier eine größere Bearbeitungsbreite gewählt werden, da das Trennmittel bzw. die Fräse ohnehin nur im Bereich der tatsächlichen Leiterbahn seine Wirkung entfaltet.

In einer anderen Weiterbildung der vorliegenden Erfindung kann vorgesehen sein, dass wenigstens durch Auswertung der Recyclinginformation wenigstens eine die Recycelbarkeit der Elektronikkomponente verbessernde Anpassung der Herstellungsinformation und eine entsprechende Neuermittlung aktualisierter Recyclinginformation aufgrund der angepassten Herstellungsinformation erfolgt. Das bedeutet, wenn ein weniger komplexes und/oder effizienteres Recycling erreicht werden soll, kann eine Art iterative Verbesserung stattfinden, indem beispielsweise Verbesserungsansätze beim Recycling aufgrund der aktuell bestimmten Recyclinginformation bestimmt werden und in die Ermittlung der Herstellungsinformation rückgespeist werden, welche gegebenenfalls wiederum einen Einfluss auf die Recyclinginformation haben kann, welche in einem solchen Fall neu zu ermitteln ist. Somit ist eine weitere Verbesserung der Recyclingeffizienz und/oder der Umweltverträglichkeit von Elektronikkomponenten möglich.

Neben dem Verfahren zur Herstellung betrifft die vorliegende Erfindung auch ein Verfahren zum automatisierten Recycling und/oder zur automatisierten Reparatur einer Elektronikkomponente gemäß dem Anspruch 2. Dieses zeichnet sich insbesondere dadurch aus, dass die Elektronikkomponente mittels der den zweiten Steuerbefehlssatz ausführenden Recyclingeinrichtung recycelt wird und/oder mittels der den dritten Steuerbefehlssatz ausführenden Reparatureinrichtung repariert wird. Sämtliche Ausführungen bezüglich des Herstellungsverfahrens lassen sich analog auf das Recycling- und/oder Reparaturverfahren übertragen, so dass hiermit ebenso die bereits genannten Vorteile erreicht werden können.

Wie bereits erläutert wurde, sieht die Erfindung vor, bei der automatisierten Herstellung die Nachbearbeitungsinformation in einem Speichermittel der Elektronikkomponente zu speichern. Ferner ist es besonders zweckmäßig, wenn die Herstellungseinrichtung und die Recyclingeinrichtung, die verwendet werden, baugleich sind. Dies kann im Übrigen auch für die Reparatureinrichtung gelten.

Die Erfindung betrifft ferner ein Herstellungssystem mit einer Herstellungseinrichtung und einer Recheneinrichtung, die zur Durchführung eines erfindungsgemäßen Verfahrens ausgebildet ist. Eine derartige Recheneinrichtung kann beispielsweise zum einen eine CAD- und/oder CAM-Einrichtung umfassen, mittels welcher die Aufbauinformation ermittelt wird und in entsprechende Steuerbefehlssätze umgewandelt werden kann. Die Recheneinrichtung umfasst eine Steuereinrichtung der Herstellungseinrichtung und kann ferner, insbesondere im Hinblick auf das Recycling- und/oder Reparaturverfahren, auch wenigstens eine Steuereinrichtung der Reparatureinrichtung aufweisen, welche entsprechende, für sie bestimmte Steuerbefehlssätze ausführen. Konkret kann die Recheneinrichtung beispielsweise eine Ermittlungseinheit aufweisen, die zum Ermitteln der Herstellungsinformation und der Nachbearbeitungsinformation unter Verwendung der bereitgestellten Aufbauinformation ausgebildet ist. Weitere Funktionseinheiten können für weitere Schritte des erfindungsgemäßen Verfahrens vorgesehen sein, insbesondere entsprechende Steuereinheiten, die die Steuerbefehlssätze ausführen. Die Recheneinrichtung weist wenigstens einen Prozessor und wenigstens ein Speichermittel auf.

Ein denkbares Computerprogramm ist beispielsweise direkt in wenigstens ein Speichermittel einer Recheneinrichtung ladbar und weist Programmmittel auf, um die Schritte eines hierin beschriebenen Verfahrens auszuführen, wenn das Computerprogramm in der Recheneinrichtung ausgeführt wird. Dabei kann das Computerprogramm bevorzugt zum einen einen Algorithmus umsetzen, der die gemeinsame und im Wesentlichen gleichzeitige Ermittlung der Herstellungsinformation und der Nachbearbeitungsinformation, wie beschrieben, zum Zeitpunkt der Vorbereitung der Herstellung erlaubt. Das Computerprogramm kann ferner, insbesondere im Fall des Herstellungs- und/oder Recycling- und/oder Reparaturverfahrens, einen Interpreter für die Steuerbefehlssätze aufweisen, um Komponenten der entsprechenden Einrichtungen gemäß den Steuerbefehlssätzen anzusteuern.

Das Computerprogramm kann auf einem elektronisch lesbaren Datenträger gespeichert sein, welcher mithin darauf gespeicherte elektronisch lesbare Steuerinformationen aufweist, welche zumindest ein denkbares Computerprogramm umfassen und derart ausgestaltet sind, dass sie bei Verwendung des Datenträgers in einer Recheneinrichtung eines Herstellungssystems ein erfindungsgemäßes Verfahren durchführen. Bei dem Datenträger kann es sich um einen nichttransienten Datenträger, beispielsweise eine CD-ROM, handeln.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen generellen Ablaufplan eines Ausführungsbeispiels des erfindungsgemäßen Verfahrens,
- Fig. 2: den funktionalen Aufbau einer Recheneinrichtung, und
- Fig. 3: einen Ausschnitt einer Oberfläche einer Elektronikkomponente mit Bearbeitungswegen.

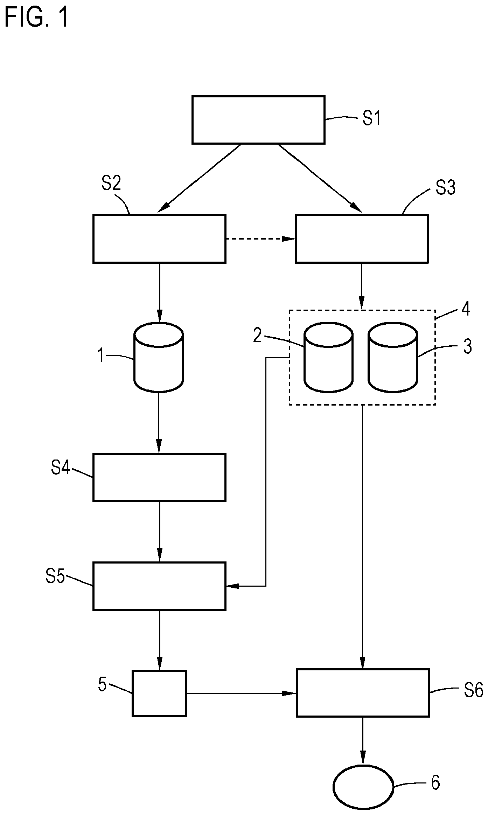

Fig. 1 zeigt einen generellen Ablaufplan eines Ausführungsbeispiels des erfindungsgemäßen Verfahrens. Dabei sind sowohl die Herstellung als auch das Recycling einer zumindest teilweise 3D-gedruckten Elektronikkomponente umfasst, wobei die Elektronikkomponente wenigstens eine Leiterbahn und wenigstens ein SMD-Bauteil aufweist, die auf einem insbesondere dreidimensional ausgeformten Substrat angeordnet sind. Als Substratmaterial kann beispielsweise Kunststoff, Glasfaser, Kohlenstofffaser und/oder beschichtetes Holz verwendet werden. Leiterbahnen können beispielsweise aus Silber oder Kupfer aufgebracht werden. SMD-Bauteile können beispielsweise Chips, Kondensatoren, Widerstände, Induktivitäten, Schalter, Steckerkomponenten und dergleichen umfassen. Die Elektronikkomponente kann auch gedruckte elektronische Bauteile aufweisen, beispielsweise gedruckte Widerstände, Kondensatoren und dergleichen.

In einem Schritt S1 des Verfahrens wird zunächst eine Aufbauinformation bereitgestellt, beispielsweise in Form eines in einem CAD-Prozess erstellten dreidimensionalen Modells der herzustellenden Elektronikkomponente. Unter Verwendung dieser Aufbauinformation können nun automatisch in einem Schritt S2 Herstellungsinformationen abgeleitet werden, die einen ersten Steuerbefehlssatz 1 in Maschinencode, beispielsweise G-Code, umfassen. Der erste Steuerbefehlssatz 1 kann unmittelbar von der Herstellungseinrichtung, konkret einer Steuereinrichtung der Herstellungseinrichtung, ausgeführt werden, um in diesem Fall vollständig automatisiert, in anderen Fällen wenigstens teilweise automatisiert, die Elektronikkomponente herzustellen.

Die Herstellungseinrichtung kann hierzu eine Bewegungsmechanik und wenigstens ein Herstellungswerkzeug aufweisen, vorliegend wenigstens ein 3D-Druckwerkzeug, wenigstens ein Platzierwerkzeug (Pick-and-Place-Werkzeug) für SMD-Bauteile und wenigstens ein Vorbearbeitungs- und/oder Nachbearbeitungswerkzeug. Die Herstellungswerkzeuge werden mittels der Bewegungsmechanik hochgenau bewegt, beispielsweise ein 3D-Druckwerkzeug, um entlang eines Bearbeitungsweges eine Leiterbahn aufbringen zu können, bzw. ein Platzierwerkzeug, um ein SMD-Bauteil positionsgenau mittels eines leitfähigen Klebstoffs, welcher zunächst mit einem anderen oder demselben Werkzeug positioniert sein kann, zu befestigen.

Für den im Folgenden diskutierten Schritt S3 wird nun angenommen, dass eine zur Reparatur zu verwendende Reparatureinrichtung und eine zum Recycling zu verwendende Recyclingeinrichtung zumindest dahingehend im Wesentlichen baugleich sind, dass ebenso eine Bewegungsmechanik gegeben ist, die entsprechende Werkzeuge bewegt. Bevorzugt können wenigstens die Recyclingeinrichtung und die Herstellungseinrichtung vollständig baugleich mit wenigstens teilweise austauschbaren Werkzeugen sein. Insbesondere können also das Recycling der Elektronikkomponente und die Herstellung der Elektronikkomponente mittels derselben Maschine, also Einrichtung, erfolgen.

In einem Schritt S3 wird in eben dieser Vorbereitungsphase der Herstellung, im Wesentlichen gemeinsam mit Schritt S2, wobei Teile der Herstellungsinformation auch berücksichtigt werden können, aufgrund der Aufbauinformation auch wenigstens ein zweiter Steuerbefehlssatz 2 für die Recyclingeinrichtung und/oder wenigstens ein dritter Steuerbefehlssatz 3 für die Reparatureinrichtung als Nachbearbeitungsinformation 4 ermittelt, wobei der als Reparaturinformation aufzufassende dritte Steuerbefehlssatz 3 als optional anzusehen ist. Wesentlich ist die Ermittlung des als Recyclinginformation aufzufassenden zweiten Steuerbefehlssatzes 2.

Bei dieser Ermittlung im Schritt S3 wird in jedem Fall die Aufbauinformation verwendet, konkret in diesem Fall aber auch die Herstellungsinformation, nachdem die im Steuerbefehlssatz 1 verwendeten Bearbeitungswege im Hinblick auf die Baugleichheit der ausführenden Einrichtungen letztlich unmittelbar auf den zweiten Steuerbefehlssatz 2 und gegebenenfalls den dritten Steuerbefehlssatz 3 übertragen werden können. Beispielsweise kann also vorgesehen sein, dass bei der Herstellung gemäß dem ersten Steuerbefehlssatz 1 eine Leiterbahn mittels eines Druckwerkzeugs aufgebracht wird und beim Recycling gemäß dem zweiten Steuerbefehlssatz 2 derselbe Bearbeitungsweg abgefahren wird, um die Leiterbahn mittels eines entsprechenden Recyclingwerkzeugs, beispielsweise eines Fräswerkzeugs und/oder eines ein Trennmittel abgebenden und/oder absaugenden Recyclingwerkzeugs, wieder entfernt wird. Ähnlich können beispielsweise gemäß dem zweiten Steuerbefehlssatz SMD-Bauteile, die gemäß dem ersten Steuerbefehlssatz an bestimmten Positionen positioniert wurden, positionsgenau wieder angefahren werden und, insbesondere wiederum mittels des Pick-and-Place-Werkzeugs bzw. Platzierwerkzeugs, wieder entfernt werden. Für den dritten Steuerbefehlssatz 3 der Reparaturinformation, falls dieser bestimmt wird, kann gelten, dass entsprechende Austauschanweisungen für SMD-Bauteile und/oder Neudruck-Anweisungen für Leiterbahnen enthalten sind.

Zweckmäßigerweise wird wenigstens für den Recyclingvorgang, also den zweiten Steuerbefehlssatz 2, die Bearbeitungsbreite, beispielsweise beim Entfernen von Leiterbahnen, breiter gewählt, um eventuelle Positionsungenauigkeiten möglichst zu kompensieren und eine möglichst vollständige Rückgewinnung des Leiterbahnmaterials (sowie des darunter verbliebenen Substrats) zu ermöglichen.

Es sei an dieser Stelle angemerkt, dass auch eine gegenseitige Rückkopplung zwischen den Schritten S2 und S3 möglich ist, beispielsweise um den Recyclingprozess im Schritt S3 im Hinblick auf eine besonders hohe Umweltverträglichkeit zu verbessern, so dass beispielsweise die Herstellungsinformation zum besseren Recycling noch angepasst werden kann und dergleichen.

In einem Schritt S4 wird die Elektronikkomponente aufgrund des ersten Steuerbefehlssatzes 1 bzw. allgemein der Herstellungsinformation mittels der Herstellungseinrichtung hergestellt, wobei wenigstens teilweise 3D-Druck verwendet wird. In einem Schritt S5 wird die Nachbearbeitungsinformation 4 in ein Speichermittel der hergestellten Elektronikkomponente eingespeichert, um dort vorgehalten zu werden. Dieses Speichermittel kann beispielsweise auf RFID-Technologie basieren, aber auch über entsprechende Anschlüsse, beispielsweise einen Steckkontakt, elektronisch auslesbar gestaltet sein. Gleichzeitig wird die Nachbearbeitungsinformation auf einer Servereinrichtung des Herstellers der Elektronikkomponente vorgehalten, falls ein Auslesen aus dem Speichermittel nicht möglich ist. Ergebnis dieses Herstellungsprozesses ist dann die Elektronikkomponente 5.

Wurde die optionale Reparaturinformation im Schritt S3 bestimmt, können während der Lebenszeit der Elektronikkomponente 5 Reparaturmaßnahmen gemäß dem dritten Steuerbefehlssatz 3 automatisiert vorgenommen werden.

Ist das Ende der Lebenszeit der Elektronikkomponente 5 erreicht bzw. wird dieser obsolet, erfolgt in einem Schritt S6 das Recycling mittels der Recyclingeinrichtung, welche dem zweiten Steuerbefehlssatz 2 aus dem Speichermittel der Elektronikkomponente 5 automatisch ausliest und innerhalb ihrer Steuereinrichtung umsetzt, um Materialien und Bestandteile der Elektronikkomponente 5 als Recyclingergebnis 6 rückzugewinnen. SMD-Bauteile können beispielsweise wiederverwertet werden; Materialien können einer erneuten Herstellung zugeführt werden und/oder verkauft werden.

Dabei sei nochmals angemerkt, dass als Recyclingeinrichtung wiederum die Herstellungseinrichtung bzw. eine weitgehend oder vollständig baugleiche Einrichtung verwendet werden kann, wobei insbesondere auch veraltete Herstellungseinrichtungen als Recyclingeinrichtungen weiterbetrieben werden können, nachdem es auf eine gesteigerte Genauigkeit beim Recycling älterer Elektronikkomponenten 5 nicht ankommt bzw. eine entsprechende Kompensation von Toleranzen aufgrund der Wahl breiterer Bearbeitungswege vorgenommen werden kann, wie erläutert.

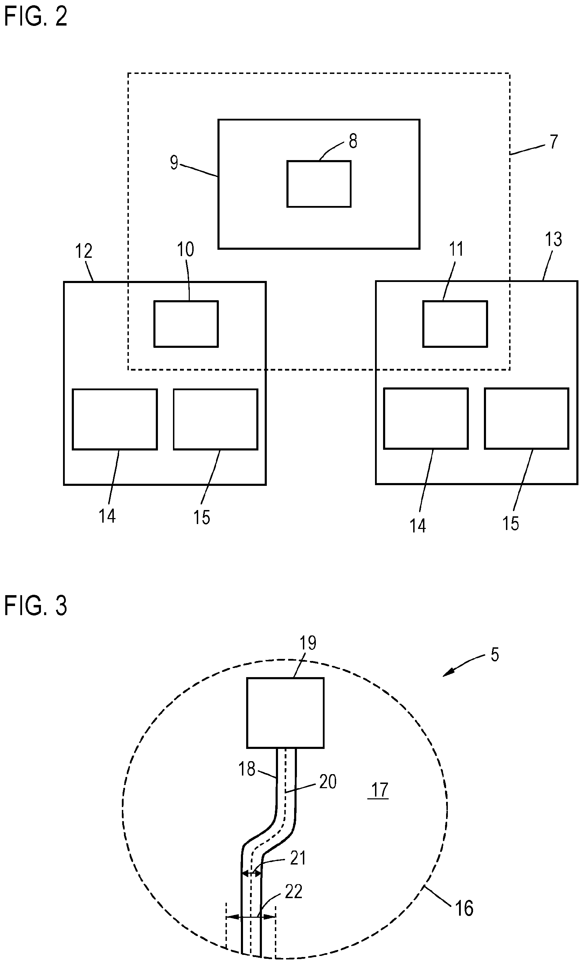

Fig. 2 zeigt eine Prinzipskizze eines Systems, in dem das erfindungsgemäße Verfahren durchgeführt werden kann. Eine Recheneinrichtung 7 zur Durchführung des in Fig. 1 gezeigten Ausführungsbeispiels umfasst dabei zunächst eine Ermittlungseinheit 8 zur Durchführung der Schritte S2 und S3, wobei die Ermittlungseinheit 8 Teil einer CAD- und CAM-Einrichtung 9 ist. Dabei kann es sich beispielsweise um einen Rechner handeln, auf dem eine entsprechende CAD-CAM-Software vorhanden ist. Mittels CAD kann die Aufbauinformation im beispielsweise wenigstens teilweise manuellen Design der Elektronikkomponente 5 ermittelt werden und der Ermittlungseinheit 8 bereitgestellt werden, welche diese nutzt, um die Herstellungsinformation und die Nachbearbeitungsinformation 4, konkret den ersten Steuerbefehlssatz 1, den zweiten Steuerbefehlssatz 2 und den dritten Steuerbefehlssatz 3, hieraus abzuleiten.

Die Recheneinrichtung 7 umfasst ferner vorliegend die Steuereinrichtungen 10, 11 jeweils der Herstellungseinrichtung 12 und der Recyclingeinrichtung 13.

Sowohl die Herstellungseinrichtung 12 als auch die Recyclingeinrichtung 13 umfassen als Komponenten insbesondere eine Bewegungsmechanik 14 und Werkzeuge 15, wie bereits erläutert, wobei selbstverständlich auch weitere Komponenten vorgesehen sein können. Die Steuereinrichtungen 10, 11 weisen einen Interpreter auf, der es ihnen ermöglicht, Steuerbefehlssätze 1, 2, 3 in eine unmittelbare Ansteuerung ihrer Komponenten umzuwandeln, mithin diese auszuführen.

Fig. 3 zeigt schließlich einen Ausschnitt 16 einer insbesondere dreidimensional ausgebildeten Oberfläche 17 einer Elektronikkomponente 5. Zu sehen ist insbesondere eine Leiterbahn 18, beispielsweise aus Silber, die an einem SMD-Bauteil 19, beispielsweise einer LED, endet. Die Leiterbahn 18 ist mittels eines Druckwerkzeugs entlang des Bearbeitungswegs 20 aufgebracht worden, wobei die Bearbeitungsbreite im Herstellungsprozess der Breite 21 der Leiterbahn 18 entspricht. Für den Recyclingprozess, also den zweiten Steuerbefehlssatz 2, wird im Schritt S3 nun eine größere Bearbeitungsbreite 22 gewählt, wie im unteren Bereich von Fig. 3 angedeutet ist. Auf diese Weise können Toleranzen ausgeglichen werden.

Bearbeitungswege können im Übrigen auch das Anfahren von Positionen von SMD-Bauteilen 19 und/oder das Aufbringen und entsprechende Abtragen von gedruckten elektronischen Bauteilen betreffen.

## Patentansprüche

1. Verfahren zur automatisierten Herstellung einer Elektronikkomponente (5), bei der auf wenigstens einem Substrat wenigstens ein SMD-Bauteil (19) und/oder wenigstens eine Leiterbahn (18) und/oder wenigstens eine Steckerkomponente und/oder wenigstens ein gedrucktes elektronisches Bauteil angeordnet werden, wobei zur Vorbereitung der Herstellung durch 3D-Drucken eine den Aufbau der Elektronikkomponente (5) beschreibende, insbesondere mit einer CAD- und/oder CAM-Einrichtung (9) erstellte Aufbauinformation zur Ermittlung einer einen ersten, maschinenlesbaren Steuerbefehlssatz (1) für eine wenigstens teilweise zum 3D-Drucken ausgebildete Herstellungseinrichtung (12) umfassenden Herstellungsinformation verwendet wird, **dadurch gekennzeichnet, dass** gemeinsam mit dem ersten Steuerbefehlssatz (1) eine Nachbearbeitungsinformation (4) aus der Aufbauinformation, und insbesondere zusätzlich der Herstellungsinformation, ermittelt wird, die eine einen zweiten, maschinenlesbaren Steuerbefehlssatz (2) für eine zum wenigstens teilweise, insbesondere vollständig, automatisierten Recycling der Elektronikkomponente (5) ausgebildete Recyclingeinrichtung (13) für das Recycling der Elektronikkomponente (5) durch Rückgewinnung wenigstens eines Materials der Elektronikkomponente (5) umfassende Recyclinginformation und/oder eine einen dritten, maschinenlesbaren Steuerbefehlssatz (3) für eine zum wenigstens teilweise automatischen Reparieren der Elektronikkomponente (5) ausgebildete Reparatureinrichtung umfassende Reparaturinformation umfasst, wobei die Elektronikkomponente (5) wenigstens teilweise, bevorzugt vollständig, automatisiert mittels der den ersten Steuerbefehlssatz (1) ausführenden Herstellungseinrichtung (12) durch das 3D-Drucken hergestellt wird, wobei die Nachbearbeitungsinformation (4) in einem Speichermittel der Elektronikkomponente (5) gespeichert wird.

2. Verfahren zum automatisierten Recycling und/oder zur automatisierten Reparatur einer mit einem Verfahren gemäß Anspruch 1 hergestellten Elektronikkomponente (5), **dadurch gekennzeichnet, dass** die Elektronikkomponente (5) mittels der den in dem Speichermittel der Elektronikkomponente (5) gespeicherten zweiten Steuerbefehlssatz (2) ausführenden Recyclingeinrichtung (13) recycelt wird und/oder mittels der den in dem Speichermittel der Elektronikkomponente (5) gespeicherten dritten Steuerbefehlssatz (3) ausführenden Reparatureinrichtung repariert wird.

3. Verfahren nach Anspruch 2, **dadurch gekennzeichnet, dass** die Herstellungseinrichtung (12) und die Recyclingeinrichtung (13), die verwendet werden, baugleich sind und zur Ermittlung der Recyclinginformation eine Baugleichheit der Herstellungseinrichtung (12) und der Recyclingeinrichtung (13) angenommen wird.

4. Verfahren nach einem der Ansprüche 2 oder 3, **dadurch gekennzeichnet, dass** die Recyclingeinrichtung (13) die Recyclinginformation und/oder die Reparatureinrichtung die Reparaturinformation automatisch aus dem Speichermittel ausliest.

5. Verfahren nach einem der vorangehenden Ansprüche, **dadurch gekennzeichnet, dass** die Nachbearbeitungsinformation (4) zusätzlich abrufbar auf einer Servereinrichtung des Herstellers der Elektronikkomponente (5) vorgehalten wird.

6. Verfahren nach einem der vorangehenden Ansprüche, **dadurch gekennzeichnet, dass** die Recyclinginformation, insbesondere der zweite Steuerbefehlssatz (2), eine durchzuführende und/oder auszusparende Recyclingmaßnahme und/oder eine anzuwendende Reihenfolge von Recyclingmaßnahmen und/oder wenigstens einen Betriebsparameter wenigstens einer Recyclingmaßnahme und/oder ein zu verwendendes Recyclingmaterial, insbesondere Trennmittel, und/oder ein zu verwendendes Recyclingwerkzeug beschreibt.

7. Verfahren nach einem der vorangehenden Ansprüche, **dadurch gekennzeichnet, dass** sowohl die Herstellungseinrichtung (12) als auch die Recyclingeinrichtung (13) zur Bewegung wenigstens eines Werkzeugs entlang von durch die Steuerbefehlssätze der Herstellungsinformation und der Recyclinginformation beschriebenen Bearbeitungswegen (20) relativ zu der Elektronikkomponente (5) ausgebildet sind, wobei wenigstens ein Bearbeitungsweg (20), insbesondere alle Bearbeitungswege (20), der Herstellungsinformation und der Recyclinginformation gleich gewählt werden.

8. Verfahren nach Anspruch 7, **dadurch gekennzeichnet, dass** bei gleichen Bearbeitungswegen (20) seitens der Herstellungseinrichtung (12) und der Recyclingeinrichtung (13) wenigstens teilweise unterschiedliche Werkzeuge verwendet werden und/oder wenigstens einer des wenigstens einen gleichen Bearbeitungswegs (20) den Verlauf einer 3D-zu druckenden Leiterbahn (18) betrifft.

9. Verfahren nach Anspruch 7 oder 8, **dadurch gekennzeichnet, dass**, insbesondere bei einer angenommenen geringeren Genauigkeit der Recyclingeinrichtung (13), die Bearbeitungsbreite (22) entlang wenigstens eines des wenigstens einen gleichen Bearbeitungswegs (20) für die Recyclingeinrichtung (13) größer gewählt wird.

10. Herstellungssystem, umfassend eine Herstellungseinrichtung (12) und eine Recheneinrichtung (7), die eine Steuereinrichtung (10) der Herstellungseinrichtung (12) umfasst, wobei das Herstellungssystem zur Durchführung eines Verfahrens nach Anspruch 1 ausgebildet ist.

## Claims

1. Method for the automated production of an electronic component (5), in which at least one SMD component part (19) and/or at least one conductor track (18) and/or at least one plug component and/or at least one printed electronic component part is/are arranged on at least one substrate, wherein, in order to prepare for production by means of 3-D printing, an item of structural information which describes the structure of the electronic component (5) and is created, in particular, using a CAD and/or CAM device (9) is used to determine an item of production information comprising a first machine-readable control instruction set (1) for a production device (12) at least partially designed for 3-D printing, **characterized in that** an item of post-processing information (4) is determined, together with the first control instruction set (1), from the structural information and, in particular, additionally the production information, which post-processing information comprises an item of recycling information comprising a second machine-readable control instruction set (2) for a recycling device (13), designed for the at least partially, in particular completely, automated recycling of the electronic component (5), for recycling the electronic component (5) by recovering at least one material of the electronic component (5) and/or an item of repair information comprising a third machine-readable control instruction set (3) for a repair device designed to at least partially automatically repair the electronic component (5), wherein the electronic component (5) is produced in an at least partially, preferably completely, automated manner by means of 3-D printing using the production device (12) that executes the first control instruction set (1), wherein the post-processing information (4) is stored in a storage means of the electronic component (5).

2. Method for the automated recycling and/or the automated repair of an electronic component (5) produced using a method according to Claim 1, **characterized in that** the electronic component (5) is recycled by means of the recycling device (13) executing the second control instruction set (2) stored in the storage means of the electronic component (5) and/or is repaired by means of the repair device executing the third control instruction set (3) stored in the storage means of the electronic component (5).

3. Method according to Claim 2, **characterized in that** the production device (12) and the recycling device (13) which are used are structurally identical and the production device (12) and the recycling device (13) are assumed to be structurally identical for the purpose of determining the recycling information.

4. Method according to either of Claims 2 and 3, **characterized in that** the recycling device (13) automatically reads the recycling information and/or the repair device automatically reads the repair information from the storage means.

5. Method according to one of the preceding claims, **characterized in that** the post-processing information (4) is additionally held retrievably on a server device belonging to the producer of the electronic component (5) .

6. Method according to one of the preceding claims, **characterized in that** the recycling information, in particular the second control instruction set (2), describes a recycling measure to be performed and/or omitted and/or a sequence of recycling measures to be used and/or at least one operating parameter of at least one recycling measure and/or a recycling material to be used, in particular a release agent, and/or a recycling tool to be used.

7. Method according to one of the preceding claims, **characterized in that** both the production device (12) and the recycling device (13) are designed to move at least one tool relative to the electronic component (5) along processing paths (20) described by the control instruction sets of the production information and the recycling information, wherein at least one processing path (20), in particular all processing paths (20), in the production information and the recycling information is/are selected to be identical.

8. Method according to Claim 7, **characterized in that**, in the case of identical processing paths (20), at least partially different tools are used by the production device (12) and the recycling device (13) and/or at least one of the at least one identical processing path (20) relates to the course of a conductor track (18) to be 3-D printed.

9. Method according to Claim 7 or 8, **characterized in that**, in particular in the case of assumed lower accuracy of the recycling device (13), the processing width (22) along at least one of the at least one identical processing path (20) is selected to be larger for the recycling device (13).

10. Production system comprising a production device (12) and a computing device (7), which comprises a control device (10) of the production device (12), wherein the production system is designed to carry out a method according to Claim 1.

## Revendications

1. Procédé de fabrication automatisée d'un composant électronique (5) pour lequel au moins un composant SMD (19) et/ou au moins une piste conductrice (18) et/ou au moins un composant enfichable et/ou au moins un composant électronique imprimé sont disposés sur au moins un substrat, dans lequel, pour la préparation de la fabrication par impression 3D, une information de montage décrivant le montage du composant électronique (5) et créée en particulier par un dispositif de CFAO (9), est utilisée pour déterminer une information de fabrication comprenant un premier jeu d'instructions de commande (1) lisible par machine pour un dispositif de fabrication (12) réalisé au moins partiellement pour l'impression 3D,
**caractérisé en ce que** conjointement avec le premier jeu d'instructions de commande (1), une information de réusinage (4) est déterminée à partir de l'information de montage, et en particulier en plus de l'information de fabrication, qui comprend une information de recyclage comprenant un deuxième jeu d'instructions de commande (2) lisible par machine pour un dispositif de recyclage (13) réalisé pour un recyclage au moins partiellement, en particulier entièrement, automatisé du composant électronique (5) en vue du recyclage du composant électronique (5) par la récupération d'au moins un matériau du composant électronique (5), et/ou une troisième information de réparation comprenant un troisième jeu d'instructions de commande (3) lisible par machine pour un dispositif de réparation réalisé pour une réparation au moins partiellement automatique du composant électronique (5), dans lequel le composant électronique (5) est fabriqué de manière au moins partiellement, de préférence entièrement, automatisée au moyen du dispositif de fabrication (12) exécutant le premier jeu d'instructions de commande (1) par impression 3D, dans lequel l'information de réusinage (4) est stockée dans un moyen de stockage du composant électronique (5).

2. Procédé de recyclage automatisé et/ou de réparation automatisée d'un composant électronique (5) fabriqué par un procédé selon la revendication 1, **caractérisé en ce que** le composant électronique (5) est recyclé au moyen du dispositif de recyclage (13) exécutant le deuxième jeu d'instructions de commande (2) stocké sur le moyen de stockage du composant électronique (5), et/ou est réparé au moyen du dispositif de réparation exécutant le troisième jeu d'instructions de commande (3) stocké sur le moyen de stockage du composant électronique (5).

3. Procédé selon la revendication 2, **caractérisé en ce que** le dispositif de fabrication (12) et le dispositif de recyclage (13) qui sont utilisés sont de même type, et un type identique du dispositif de fabrication (12) et du dispositif de recyclage (13) est supposé pour déterminer l'information de recyclage.

4. Procédé selon l'une quelconque des revendications 2 ou 3, **caractérisé en ce que** le dispositif de recyclage (13) lit l'information de recyclage et/ou le dispositif de réparation lit l'information de réparation automatiquement à partir du moyen de stockage.

5. Procédé selon l'une quelconque des revendications précédentes, **caractérisé en ce que** l'information de réusinage (4) est de plus mise à disposition sur un dispositif serveur du fabricant du composant électronique (5) de manière à pouvoir être consultée.

6. Procédé selon l'une quelconque des revendications précédentes, **caractérisé en ce que** l'information de recyclage, en particulier le deuxième jeu d'instructions de commande (2), décrit une mesure de recyclage à exécuter et/ou à réserver et/ou un ordre à suivre de mesures de recyclage et/ou au moins un paramètre de fonctionnement d'au moins une mesure de recyclage et/ou un matériau de recyclage à utiliser, en particulier un agent séparateur, et/ou un outil de recyclage à utiliser.

7. Procédé selon l'une quelconque des revendications précédentes, **caractérisé en ce qu'**à la fois le dispositif de fabrication (12) et le dispositif de recyclage (13) sont réalisés pour déplacer au moins un outil le long de chemins d'usinage (20) décrits par les jeux d'instructions de commande de l'information de fabrication et de l'information de recyclage par rapport au composant électronique (5), dans lequel au moins un chemin d'usinage (20), en particulier tous les chemins d'usinage (20), de l'information de fabrication et de l'information de recyclage sont choisis pour être identiques.

8. Procédé selon la revendication 7, **caractérisé en ce que** pour des chemins d'usinage (20) identiques, du côté du dispositif de fabrication (12) et du dispositif de recyclage (13), des outils au moins partiellement différents sont utilisés et/ou au moins l'un dudit au moins un chemin d'usinage (20) identique concerne le trajet d'une piste conductrice (18) à imprimer en 3D.

9. Procédé selon la revendication 7 ou 8, **caractérisé en ce qu'**en particulier en supposant une précision inférieure du dispositif de recyclage (13), la largeur d'usinage (22) le long d'au moins l'un dudit au moins un chemin d'usinage (20) identique est choisie pour être plus grande pour le dispositif de recyclage (13).

10. Système de fabrication, comprenant un dispositif de fabrication (12) et un dispositif de calcul (7) qui comprend un dispositif de commande (10) du dispositif de fabrication (12), dans lequel le système de fabrication est réalisé pour exécuter un procédé selon la revendication 1.
